(19) Europäisches Patentamt
European Patent Office
Office européen des brevets

(11) Veröffentlichungsnummer: **0 088 392**
**B1**

(12) # EUROPÄISCHE PATENTSCHRIFT

(45) Veröffentlichungstag der Patentschrift: **27.12.84**

(51) Int. Cl.³: **C 09 B 5/62,** C 07 D 471/06, C 08 K 5/00, C 09 D 17/00

(21) Anmeldenummer: **83102122.5**

(22) Anmeldetag: **04.03.83**

(54) **Verfahren zur Herstellung von Perylen-3,4,9,10-tetracarbonsäure-N,N'-dialkyl-diimid-Pigmenten.**

(30) Priorität: **06.03.82 DE 3208192**

(43) Veröffentlichungstag der Anmeldung:
**14.09.83 Patentblatt 83/37**

(45) Bekanntmachung des Hinweises auf die Patenterteilung:
**27.12.84 Patentblatt 84/52**

(84) Benannte Vertragsstaaten:
**CH DE FR GB LI**

(56) Entgegenhaltungen:
**FR - A - 555 954**
**FR - A - 2 300 115**
**GB - A - 2 029 440**
**US - A - 3 332 931**

(73) Patentinhaber: **HOECHST AKTIENGESELLSCHAFT, Postfach 80 03 20, D-6230 Frankfurt am Main 80 (DE)**

(72) Erfinder: **Spietschka, Ernst, Dr., Kirchweg 3, D-6270 Idstein/Taunus (DE)**
Erfinder: **Urban, Manfred, Steigerwaldstrasse 2a, D-6200 Wiesbaden (DE)**

EP 0 088 392 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

**Beschreibung**

Die Erfindung betrifft ein Verfahren zur Herstellung von Perylen-3,4,9,10-tetracarbonsäure-N,N'-dialkyldiimid in Pigmentform.

Perylen-3,4,9,10-tetracarbonsäure-N,N'dialkylalkyldiimide, insbesondere das Perylen-3,4,9,10-tetracarbonsäure-N,N'-dimethyldiimid (CI Pigment Red 179, Formel Nr. 71130), sind als Substanz bereits lange bekannt. Zu ihrer Herstellung wurden folgende Verfahren beschrieben.

Die DE-B Nr. 2726682 beschreibt ein Verfahren, bei dem Perylen-3,4,9,10-tetracarbonsäurediimid mit einem Methylierungsmittel wie Methylhalogenid oder Dimethylsulfat in wässerigem Medium methyliert wird. Wegen der Unlöslichkeit des Ausgangs- und des Endproduktes im Reaktionsmedium wird keine vollständige Umsetzung erreicht. Das Endprodukt ist deshalb immer mit Perylen-3,4,9,10-tetracarbonsäurediimid und Perylen-3,4,9,10-tetracarbonsäureimid-N-methylimid verunreinigt. Dieses Gemisch führt wegen dessen rotvioletter Eigenfärbung zu Pigmenten, die marronfarbene, trübe Lackierungen liefern.

Auch nach dem in der DE-A Nr. 1963728 beschriebenen Verfahren, bei dem die Alkylierung des Perylen-3,4,9,10-tetracarbonsäurediimids mit Dimethylsulfat bzw. den anderen Dialkylsulfaten durchgeführt wird, arbeitet man im heterogenen System. Während der Reaktion des Perylen-3,4,9,10-tetracarbonsäurediimids mit dem Dimethylsulfat wird zur Feinverteilung gleichzeitig eine Salzbehandlung in Gegenwart von Lösungsmitteln durchgeführt.

Auch bei dieser Arbeitsweise wird keine vollständige Umsetzung erreicht, was ebenfalls zu einem Gemisch von Produkten unterschiedlichen Alkylierungsgrades und folglich zu Pigmenten führt, die nur marronfarbene, trübe Lackierungen liefern. Die hohe Salz- und Lösungsmittelbelastung wirft zusätzliche Probleme hinsichtlich des Abwassers auf.

In der DE-A Nr. 2153087 ist ein Verfahren zur Herstellung von Perylen-3,4,9,10-tetracarbonsäure-N,N'-dimethyldiimid in roter Form ohne abtrübende Nebenprodukte beschrieben, bei dem 1 mol Perylen-3,4,9,10-tetracarbonsäuredianhydrid mit 2 mol Methylamin bei 120 bis 140° C kondensiert wird. Dabei laufen die beiden Stufen (N-Alkylamid- bzw. Bis-N-alkylamidbildung und Ringschlussreaktion zum Diimid) nicht nacheinander, sondern gleichzeitig ab, so dass bei dieser Arbeitsweise nicht zu erwarten ist, dass ein einheitliches Pigmentkorn erhalten wird. Das so erhaltene Produkt muss anschliessend einer zusätzlichen Feinverteilung, z.B. einer Salzvermahlung, unterworfen und in Pigmentform überführt werden.

Die DE-B Nr. 2504481 beschreibt die Umsetzung von 1 mol Perylen-3,4,9,10-tetracarbonsäuredianhydrid mit 4 bis 8 mol Methylamin bei 0 bis 5° C zum Bis(methylammonium)salz des Perylen-3,4,9,10-tetracarbonsäurebis-N-methylamids, das anschliessend durch Temperaturerhöhung zum Perylen-3,4,9,10-tetracarbonsäure-N,N'-dimethyldiimid cyclisiert wird. Das Produkt wird zwar in Pigmentform erhalten, es weist jedoch eine Reihe anwendungstechnischer Mängel auf. Infolge unvollständiger Kondensation entstehen Nebenprodukte, die durch eine Nachbehandlung entfernt werden können. Diese Pigmente sind hinsichtlich Transparenz und Farbstärke nicht voll befriedigend. Ferner bewirken diese Pigmente eine starke Erhöhung der Viskosität der Lacke.

Dagegen beschreibt die US-A Nr. 3332931 ein Verfahren zur Herstellung von Perylen-3,4,9,10-tetracarbonsäure-N,N'-diimiden von aromatischen Aminen, und zwar von solchen, die sich mit Perylen-3,4,9,10-tetracarbonsäureanhydrid nur mit grosser Schwierigkeit kondensieren lassen, wobei die Umsetzung mit Hilfe katalytischer Mengen an Zn- und Cd-Salzen organischer Säure und in hochsiedenden organischen Lösemitteln erfolgt.

Es wurde nun gefunden, dass man Perylen-3,4,9,10-tetracarbonsäure-N,N'-dialkyldiimide in hoher Reinheit und in hervorragender Pigmentqualität erhält, wenn man das bei der Umsetzung des Perylen-3,4,9,10-tetracarbonsäuredianhydrids mit Alkylamin sich bildende Bis(alkylammonium)salz des Perylen-3,4,9,10-tetracarbonsäurebis-N-alkylamids mit Ionen eines zweiwertigen Metalls in die entsprechenden schwerlöslichen Metallsalze überführt und mit diesen den Ringschluss bei erhöhter Temperatur unter Bildung der Perylen-3,4,9,10-tetracarbonsäure-N,N'-dialkyldiimide durchführt.

Gefunden wurde ein Verfahren zur Herstellung von Perylen-3,4,9,10-tetracarbonsäure-N,N'-dialkyldiimiden der Formel I

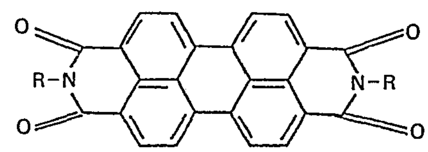

(I)

worin R einen Alkylrest, insbesondere Methyl- oder Ethylrest bedeutet, durch Umsetzen von Perylen-3,4,9,10-tetracarbonsäuredianhydrid mit Alkylamin in wässeriger Suspension bei niedriger Temperatur unter Bildung des Bis(alkylammonium)salzes des Perylen-3,4,9,10-tetracarbonsäurebis-N-alkylamids (Formel II)

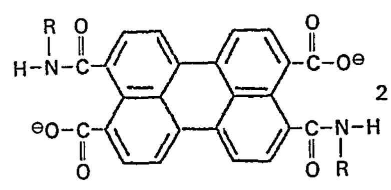

2 $NH_3R^{\oplus}$ (II)

und Ringschluss bei höherer Temperatur, das dadurch gekennzeichnet ist, dass man das Salz der Formel II mit einem Metallsalz umsetzt unter Bildung eines schwerlöslichen Salzes der Formel III

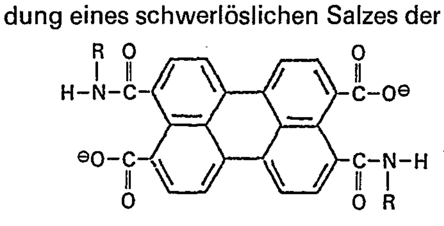

$Me^{\oplus\oplus}$ (III)

worin Me ein zweiwertiges Metall der zweiten Haupt- und Nebengruppe des Periodensystems oder zweiwertiges Eisen, vorzugsweise Ca, Sr, Ba oder Zn, bedeutet, und das Salz der Formel III der Ringschlussreaktion bei erhöhter Temperatur unterwirft.

Eine zweckmässige Arbeitsweise besteht darin, dass man Perylen-3,4,9,10-tetracarbonsauredianhydrid in der 10- bis 40fachen, vorzugsweise 15- bis 30fachen, Gew.-Menge Wasser, in dem auch ein Alkohol gelöst sein kann, suspendiert und bei etwa 0 bis etwa 30, vorzugsweise etwa 0 bis etwa 10° C, die 4- bis 10fache, vorzugsweise 6- bis 8fache, molare Menge Alkylamin zutropfen lässt. Anschliessend wird bei −10 bis +25, vorzugsweise −5 bis +10° C, eine wässerige Metallsalzlösung zutropfen gelassen, wobei das schwerlösliche Salz der Formel III ausfällt. Danach erfolgt bei einer Temperatur von etwa 20 bis etwa 150, vorzugsweise etwa 50 bis etwa 100° C, die Ringschlussreaktion zum Perylen-3,4,9,10-tetracarbonsäure-N,N'-dialkyldiimid der Formel I. Schliesslich wird zu der Pigmentsuspension gegebenenfalls eine wässerige Säure zugegeben, zweckmässigerweise Salzsäure, Ameisensäure oder Essigsäure, um das bei der Ringschlussreaktion entstandene Metallhydroxid durch Salzbildung besser auswaschbar zu machen. Danach wird das Pigment in üblicher Weise aufbereitet durch Absaugen, Waschen und Trocknen.

Das Perylen-3,4,9,10-tetracarbonsäuredianhydrid wird zweckmässigerweise in gemahlener, trockener Form oder, vorzugsweise, als feuchter Presskuchen eingesetzt.

Das ausgefällte Metallsalz der Formel III kann gegebenenfalls bei etwa 0 bis etwa 10° C abgetrennt und, in Wasser suspendiert, der Ringschlussreaktion bei den angegebenen höheren Temperaturen unterworfen werden.

Für die Metallsalzlösung werden wasserlösliche Salze, zweckmässigerweise Chloride oder Nitrate, der Metalle der zweiten Haupt- und Nebengruppe des Periodensystems oder des zweiwertigen Eisens, vorzugsweise von Calcium, Strontium, Barium oder Zink, eingesetzt. Die Konzentration der Metallsalzlösung ist nicht kritisch. Es ist auch möglich, das Metallsalz statt als wässerige Lösung in fester Form (pulverförmig) zuzugeben. Zur Ausfällung des Salzes der Formel III werden mindestens etwa 2 mol des Metallsalzes verwendet.

Je nach Anwendungszweck können zur Verbesserung der Eigenschaften gegebenenfalls vor, während oder nach der Ringschlussreaktion oberflächenaktive Substanzen zugesetzt werden.

Als oberflächenaktive Mittel seien genannt: Anionaktive Substanzen wie Fettsäuretauride, Fettsäure-N-methyltauride, Fettsäureisäthionate, Alkylbenzolsulfonate, Alkylnaphthalinsulfonate, Alkylphenolpolyglykoläthersulfate und Fettalkoholpolyglykoläthersulfate, Fettsäuren, z.B. Palmitin-, Stearin- und Ölsäure, Seifen, z.B. Alkalisalze von Fettsäuren, Naphthensäuren und Harzsäuren, z.B. Abietinsäure, alkalilösliche Harze, z.B. kolophoniummodifizierte Maleinatharze, kationaktive Substanzen, wie quaternäre Ammoniumsalze, Fettaminoäthylate, Fettaminopolyglykoläther und Fettamine, nichtionogene Substanzen wie Fettalkoholpolyglykoläther, Fettsäurepolyglykolester und Alkylphenolpolyglykoläther.

Es können auch Gemische von oberflächenaktiven Mitteln eingesetzt werden. Die Menge kann in weiten Grenzen schwanken: 0,1 bis 20, vorzugsweise 5 bis 10 Gew.-%, bezogen auf das Pigmentendprodukt.

Gegebenenfalls kann nach dem Absaugen der Pigmentpresskuchen ein Finish mit einem organischen Lösungsmittel erhalten. Als organische Lösungsmittel können Alkohole oder aromatische Chlorkohlenwasserstoffe eingesetzt werden.

Ausser durch den Einsatz von oberflächenaktiven Mitteln und/oder Lösungsmitteln lassen sich die Pigmenteigenschaften auch dadurch günstig beeinflussen, dass man vor der Zugabe der Säure bzw. vor dem Absaugen eine Nachbehandlung der nach der Ringschlussreaktion erhaltenen Pigmentsuspension in Dispergierapparaten wie Perl-, Roll- oder Schwingmühlen vornimmt.

Der Überschuss des Alkylamins kann durch Destillation zurückgewonnen werden.

Die nach dem erfindungsgemässen Verfahren erhaltenen Pigmente zeichnen sich durch grosse Reinheit, d.h. Freiheit von Nebenprodukten, durch ein sehr feines, einheitliches Primärkorn und hervorragendes koloristisches und rheologisches Verhalten aus. Sie dienen zum Einfärben von Lakken und plastischen Massen und eignen sich insbesondere zum Einfärben von Metalliclacken. Sie liefern transparente, reine, farbstarke, gelbstichig rote und wetterechte Lackierungen. Nach einigen der beanspruchten Verfahrensbedingungen sind jedoch auch Pigmente mit höherem Deckvermögen zugänglich.

*Beispiele*

In den folgenden Beispielen bedeuten Teile jeweils Gewichtsteile.

*Beispiel 1*

In einem mit Thermometer, Rührer, Einfüll- und Entgasungsöffnung versehenen Rundkolben aus Glas wurden in 3000 Teile E-Wasser (enthärtetes Wasser) unter Rühren 150 Teile in einer Stiftmühle gemahlenes, trockenes Perylen-3,4,9,10-tetracarbonsäuredianhydrid eingetragen. Zu der entstandenen Suspension wurden nach Abkühlen auf etwa 0° C während 10 min 222 Teile einer 45,5 gew.-%igen wässerigen Monomethylaminlösung zutropfen gelassen. Es wurde noch 15 min bei etwa 0° C nachgerührt. In die hierbei entstandene Lösung wurde während 15 min bei etwa 0° C eine Lösung von 84,9 Teilen wasserfreiem Calciumchlorid in 250 Teilen E-Wasser zutropfen gelassen und 1 h bei etwa 0° C nachgerührt, um die vollständige Bildung des schwerlöslichen Salzes der Formel III mit R=$CH_3$ und Me=Ca sicherzustellen. Die entstandene Suspension wurde auf etwa 80° C erhitzt und 1 h bei etwa 80° C bis zur Beendigung der Ringschlussreaktion nachgerührt. Danach wurde eine Suspension aus 16 Teilen Distearyldimethylammoniumchlorid und 700 Teilen E-Wasser zutropfen gelassen und 1 h bei etwa 80° C nachgerührt. Nach Abkühlung auf etwa 50° C wurde bei dieser Temperatur 98%ige Ameisensäure zutropfen gelassen, bis ein pH-Wert von etwa 7 erreicht war. Es wurde ½ h bei etwa 50° C nachgerührt, das erhaltene Pigment abgesaugt, mit E-Wasser chlorionenfrei gewaschen und bei etwa 80° C im Umluftschrank getrocknet.

Man erhielt 173,8 Teile gelbstichig rotes Pigment der Formel I mit $R=CH_3$, das sich hervorragend eignet zum Pigmentieren von Lacken, insbesondere – wegen seiner hohen Transparenz – von Metalliclacken.

*Beispiel 2*

Es wurde wie in Beispiel 1 beschrieben verfahren, jedoch wurden anstelle von 84,9 Teilen $CaCl_2$ 165 Teile Bariumchlorid verwendet. Man erhielt 173 Teile eines klaren roten Pigments, das ein gegenüber dem Pigment aus Beispiel 1 erhöhtes Deckvermögen aufweist und sich ebenfalls hervorragend zum Pigmentieren von Lacken eignet.

*Beispiel 3*

Es wurde wie in Beispiel 1 beschrieben verfahren, jedoch wurden anstelle von 84,9 Teilen $CaCl_2$ 180 Teile Strontiumchlorid verwendet. Man erhielt 174 Teile eines klaren roten Pigments, das ein gegenüber dem Pigment aus Beispiel 1 erhöhtes Deckvermögen aufweist und sich ebenfalls hervorragend zum Pigmentieren von Lacken eignet.

*Beispiel 4*

Es wurde wie in Beispiel 1 beschrieben verfahren, jedoch wurden anstelle von 84,9 Teilen $CaCl_2$ 92,2 Teile Zinkchlorid verwendet, und anstelle von Ameisensäure wurde etwa 15,5%ige wässerige Salzsäure zugegeben, bis ein pH-Wert von etwa 1 erreicht war. Man erhielt 172,5 Teile eines klaren roten Pigments, das sich hervorragend eignet zum Pigmentieren von Lacken, insbesondere von dekkenden Lacken.

*Beispiel 5*

In einem Rundkolben aus Glas wie er in den Beispielen 1 bis 4 verwendet wurde, wurden in 3000 Teile E-Wasser unter Rühren 150 Teile Perylen-3,4,9,10-tetracarbonsäuredianhydrid (=540 Teile feuchter Presskuchen) eingetragen. In die entstandene Suspension wurden 16 Teile einer handelsüblichen 50 gew.-%igen wässerigen Herzseife eingetragen und, nach Abkühlung auf etwa 0° C, während 10 min 222 Teile einer 45,5 gew.-%igen wässerigen Monomethylaminlösung zutropfen gelassen. Es wurde noch 15 min bei etwa 0° C nachgerührt. In die hierbei entstandene Lösung wurde während 15 min bei etwa 0° C eine Lösung von 84,9 Teilen wasserfreiem Calciumchlorid in 250 Teilen E-Wasser zutropfen gelassen und 1 h bei etwa 0° C nachgerührt, um die vollständige Bildung des schwerlöslichen Salzes der Formel III mit $R=CH_3$ und Me=Ca sicherzustellen. Die Suspension wurde auf etwa 80° C erhitzt und 1 h bei etwa 80° C bis zur Beendigung der Ringschlussreaktion nachgerührt. Danach wurde eine Suspension aus 8 Teilen Distearyldimethylammoniumchlorid und 350 Teilen E-Wasser zutropfen gelassen und 1 h bei etwa 80° C nachgerührt. Nach Abkühlung auf etwa 50° C wurde bei dieser Temperatur 98%ige Ameisensäure zutropfen gelassen, bis ein pH-Wert von etwa 7 erreicht war. Es wurde ½ h bei etwa 50° C nachgerührt, das erhaltene Pigment abgesaugt, mit E-Wasser chlorionenfrei gewaschen und bei etwa 80° C im Umluftschrank getrocknet.

Man erhielt 172,3 Teile gelbstichig rotes Pigment der Formel I mit $R=CH_3$, das sich hervorragend eignet zum Pigmentieren von Lacken, insbesondere – wegen seiner hohen Transparenz – von Metalliclacken.

*Beispiel 6*

Es wurde wie in Beispiel 5 beschrieben verfahren, jedoch wurden zum Suspendieren des Perylen-3,4,9,10-tetracarbonsäuredianhydrids anstelle von 3000 Teilen 6000 Teile E-Wasser verwendet. Man erhielt 172,2 Teile gelbstichig rotes Pigment, das sich ebenfalls hervorragend zum Pigmentieren von Lacken eignet, insbesondere – wegen seiner hohen Transparenz – von Metalliclakken.

*Beispiel 7*

Es wurde wie in Beispiel 5 beschrieben verfahren, jedoch wurde vor der Zugabe der Distearyldimethylammoniumchloridsuspension statt auf etwa 80 nur auf etwa 50° C erhitzt und 1 h bei etwa 50° C nachgerührt und bei dieser Temperatur die Distearyldimethylammoniumchloridsuspension zutropfen gelassen und 1 h nachgerührt. Man erhielt 170,8 Teile gelbstichig rotes Pigment, das sich ebenfalls hervorragend zum Pigmentieren von Lacken eignet, insbesondere – wegen seiner hohen Transparenz – von Metalliclacken.

*Beispiel 8*

Es wurde wie in Beispiel 5 beschrieben verfahren, jedoch wurde vor der Zugabe der Distearyldimethylammoniumchloridsuspension statt auf etwa 80 auf etwa 125° C in einem V4A-Autoklaven erhitzt und 1 h bei etwa 125° C nachgerührt und danach bei 80° C die Distearyldimethylammoniumchloridsuspension zutropfen gelassen und 1 h nachgerührt. Man erhielt 174,8 Teile gelbstichig rotes Pigment, das sich hervorragend eignet zum Pigmentieren von Lacken und plastischen Massen.

*Beispiel 9*

Es wurde wie in Beispiel 5 beschrieben verfahren, jedoch wurden zum Suspendieren des Perylen-3,4,9,10-tetracarbonsäuredianhydrids anstelle von 3000 Teilen E-Wasser 3000 Teile einer 10 gew.-%igen wässerigen Methanollösung verwendet. Man erhielt 175,7 Teile gelbstichig rotes Pigment, das sich hervorragend eignet zum Pigmentieren von Lacken.

*Beispiel 10*

Es wurde wie in Beispiel 5 beschrieben verfahren, jedoch wurde vor dem Absaugen der Pigmentsuspension diese während 1 h in einer Perlmühle gemahlen, danach auf etwa 80° C erhitzt und 3 h bei dieser Temperatur nachgerührt. Man erhielt 165 Teile gelbstichig rotes Pigment, das sich hervorragend eignet zum Pigmentieren von Lacken, insbesondere – wegen seiner hohen Transparenz – von Metalliclacken.

*Beispiel 11*

Es wurde wie in Beispiel 5 beschrieben verfahren, jedoch wurden anstelle von 222 Teilen einer 45,5 gew.-%igen wässerigen Monomethylaminlösung 275 Teile einer 50 gew.-%igen wässerigen Monoäthylaminlösung verwendet. Man erhielt 185,7 Teile eines gelbstichig roten Pigments der Formel I mit $R=C_2H_5$, das sich hervorragend eignet zum Pigmentieren von Lacken und plastischen Massen.

*Beispiel 12*

In einem Rundkolben aus Glas wie er in den Beispielen 1 bis 11 verwendet wurde, wurden in 3000 Teilen E-Wasser unter Rühren 222 Teile einer 45,5 gew.-%igen wässerigen Monomethylaminlösung und 15 Teile eines handelsüblichen hochkonzentrierten Nonylphenolpolyglykoläthers eingetragen sowie, nach Abkühlung auf etwa 0° C, während 1 h 150 Teile Perylen-3,4,9,10-tetracarbonsäuredianhydrid. Die entstandene Suspension wurde bei etwa 0° C 1 h nachgerührt und bei dieser Temperatur während 15 min eine Lösung von 84,9 Teilen wasserfreiem Calciumchlorid in 250 Teilen E-Wasser zutropfen gelassen und 1 h bei etwa 0° C nachgerührt. Danach wurde zum Sieden erhitzt, 2 h bei Siedetemperatur nachgerührt und dabei gleichzeitig Monomethylamin abdestilliert. Das erhaltene Pigment wurde abgesaugt, mit E-Wasser chlorionenfrei und neutral gewaschen und bei etwa 80° C im Umluftschrank getrocknet.

Man erhielt 172,5 Teile gelbstichig rotes Pigment der Formel I mit $R=CH_3$, das sich hervorragend eignet zum Pigmentieren von Lacken.

*Beispiel 13*

Es wurde wie in Beispiel 12 beschrieben verfahren, jedoch wurden anstelle von 15 Teilen eines handelsüblichen hochkonzentrierten Nonylphenolpolyglykoläthers 15 Teile Ölsäure verwendet. Man erhielt 175 Teile gelbstichig rotes Pigment, das sich hervorragend eignet zum Pigmentieren von Lacken und insbesondere plastischen Massen.

**Patentansprüche**

1. Verfahren zur Herstellung von Perylen-3,4,9,10-tetracarbonsäure-N,N'-dialkyldiimiden der Formel (I)

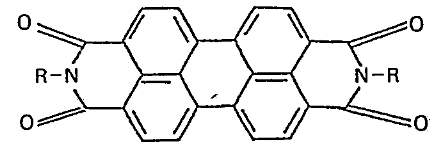

(I)

worin R einen Alkylrest, insbesondere Methyl- oder Äthylrest, bedeutet, durch Umsetzen von Perylen-3,4,9,10-tetracarbonsäuredianhydrid mit Alkylamin in wässeriger Suspension bei niedriger Temperatur unter Bildung des Bis(alkylammonium)salzes des Perylen-3,4,9,10-tetracarbonsäurebis-N-alkylamids (Formel II)

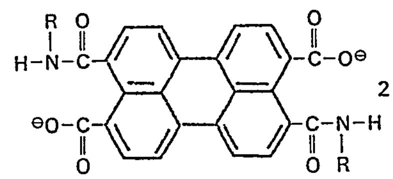

$2\ NH_3R^{\oplus}$ (II)

und Ringschluss bei höherer Temperatur, dadurch gekennzeichnet, dass man das Salz der Formel (II) mit einem Metallsalz umsetzt unter Bildung eines schwerlöslichen Salzes der Formel (III)

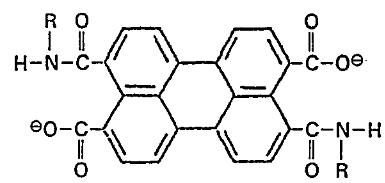

$Me^{\oplus\oplus}$ (III)

worin Me ein zweiwertiges Metall der zweiten Haupt- und Nebengruppe des Periodensystems oder zweiwertiges Eisen bedeutet, vorzugsweise Ca, Sr, Ba oder Zn, und das Salz der Formel (III) der Ringschlussreaktion bei höherer Temperatur unterwirft.

2. Verfahren nach Anspruch 1, dadurch gekennzeichnet, dass mindestens etwa 2 mol Metallsalz eingesetzt werden.

3. Verfahren nach einem der beiden Ansprüche 1 oder 2, dadurch gekennzeichnet, dass das Salz der Formel (II) mit einer Metallsalzlösung bei −5 bis +10° C umgesetzt wird.

4. Verfahren nach einem der Ansprüche 1 bis 3, dadurch gekennzeichnet, dass das Salz der Formel (III) bei einer Temperatur von etwa 20 bis etwa 150, vorzugsweise etwa 50 bis etwa 100° C, der Ringschlussreaktion unterworfen wird.

5. Verfahren nach einem der Ansprüche 1 bis 4, dadurch gekennzeichnet, dass man vor, während oder nach der Ringschlussreaktion eine oberflächenaktive Substanz und/oder ein organisches Lösungsmittel zusetzt.

6. Verfahren nach einem der Ansprüche 1 bis 5, dadurch gekennzeichnet, dass man nach erfolgter Ringschlussreaktion die erhaltene Suspension des Perylen-3,4,9,10-tetracarbonsäure-N,N'-dialkyldiimids der Formel (I) einer Nachbehandlung in einem Dispergierapparat unterwirft.

## Claims

1. A process for the preparation of perylene-3,4,9,10-tetracarboxylic acid N,N'-dialkyldiimides of the Formula (I)

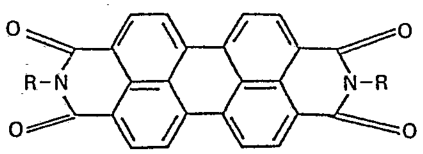

(I)

in which R is an alkyl group, in particular the methyl or ethyl group, by reacting perylene-3,4,9,10-tetracarboxylic acid dianhydride with an alkylamine in an aqueous suspension at a low temperature, with the formation of the bis-(alkylammonium) salt of perylene-3,4,9,10-tetracarboxylic acid bis-N-alkylamide (Formula II)

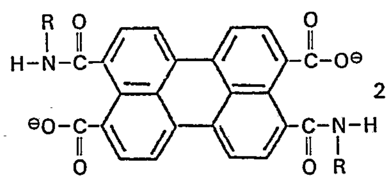

$2\ NH_3R^{\oplus}$ (II)

and cyclization at an elevated temperature, which comprises reacting the salt of the formula II with a metal salt with the formation of a sparingly soluble salt of the Formula (III)

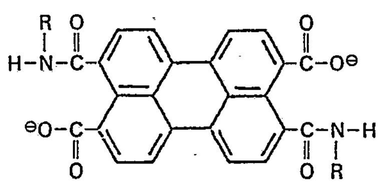

$Me^{\oplus\oplus}$ (III)

in which Me denotes a divalent metal of the second main group and sub-group of the Periodic System or divalent iron, preferably, Ca, Sr, Ba or Zn, and subjecting the salt of the Formula (III) to a cyclization reaction at an elevated temperature.

2. The process as claimed in Claim 1, wherein at least about 2 mol of metal salt are employed.

3. The process as claimed in Claim 1 or 2, wherein the salt of the Formula (II) is reacted with a metal salt solution at −5 to +10° C.

4. The process as claimed in any of Claims 1 to 3, wherein the salt of the Formula (III) is subjected to the cyclization reaction at a temperature of about 20 to about 150° C, preferably about 50 to about 100° C.

5. The process as claimed in any of Claims 1 to 4, wherein a surface-active substance and/or an organic solvent is added before, during or after the cyclization reaction.

6. The process as claimed in any of Claims 1 to 5, wherein, after the completion of the cyclization reaction, the resulting suspension of the perylene-3,4,9,10-tetracarboxylic acid N,N'-dialkyldiimide of the Formula (I) is subjected to an after-treatment in a dispersing apparatus.

## Revendications

1. Procédé de préparation de N,N'-dialkyldiimides de l'acide pérylènetétracarboxylique-3,4,9,10 répondant à la formule (I)

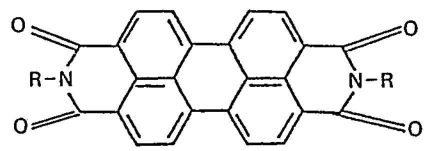

(I)

dans laquelle R désigne un radical alkyle, en particulier un radical méthyle ou éthyle, par réaction du dianhydride de l'acide pérylènetétracarboxylique-3,4,9,10 avec une alkylamine en suspension aqueuse à basse température, avec formation du sel de bis(alkylammonium) du bis-N-alkylamide de l'acide pérylènetétracarboxylique-3,4,9,10 (formule II)

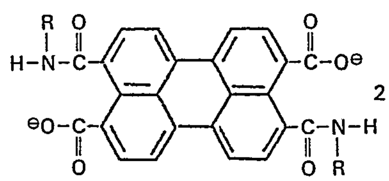

$2\ NH_3R^{\oplus}$ (II)

et fermeture du cycle à température plus élevée, caractérisé en ce qu'on fait réagir le sel répondant à la formule (II) avec un sel métallique avec formation d'un sel peu soluble répondant à la formule (III)

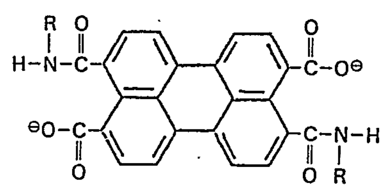

$Me^{\oplus\oplus}$ (III)

dans laquelle Me désigne un métal bivalent du second groupe principal et secondaire de la classification périodique ou le fer divalent, de préférence Ca, Sr, Ba ou Zn, et en ce qu'on soumet le sel répondant à la formule (III) à la réaction de fermeture de cycle à une température plus élevée.

2. Procédé suivant la revendication 1, caractérisé en ce qu'on utilise au moins environ 2 mol de sel métallique.

3. Procédé suivant l'une des revendications 1 ou 2, caractérisé en ce qu'on fait réagir le sel répondant à la formule (II) avec une solution de sel métallique à une température de −5 à +10° C.

4. Procédé suivant l'une quelconque des revendications 1 à 3, caractérisé en ce que le sel répondant à la formule (III) est soumis à une température d'environ 20 à environ 150° C, de préférence d'environ 50 à environ 100° C, à la réaction de fermeture de cycle.

5. Procédé suivant l'une quelconque des revendications 1 à 4, caractérisé en ce qu'on ajoute avant, pendant ou après la réaction de fermeture du cycle, une substance tensio-active et/ou un solvant organique.

6. Procédé suivant l'une quelconque des reven-

dications 1 à 5, caractérisé en ce que, lorsque la réaction de fermeture de cycle est terminée, on soumet la suspension de N,N'-dialkyldiimide de l'acide pérylènetétracarboxylique-3,4,9,10 répondant à la formule (I) obtenue à un post-traitement dans un appareil disperseur.